# EUROPEAN PATENT SPECIFICATION

(11) **EP 3 540 282 B1**
(45) Date of publication and mention of the grant of the patent: **25.08.2021**
(21) Application number: 19161870.1
(22) Date of filing: 11.03.2019
(51) Int. Cl.: F16L 17/06, F16L 37/23

(54) **QUICK CONNECT COUPLING**
SCHNELLVERBINDUNGSKOPPLUNG
COUPLAGE DE CONNEXION RAPIDE

(30) Priority: 12.03.2018 GB 201803894
(43) Date of publication of application: 18.09.2019
(73) Proprietor: CEJN AB, 541 25 Skövde (SE)
(72) Inventor: Nyfelt, Leif, 541 25 Skövde (SE)
(74) Representative: Murgitroyd & Company

(56) References cited:
- GB-A- 1 066 815
- US-A- 5 230 538
- US-A- 5 390 963
- US-A1- 2002 140 227

## Description

### Technical Field

The present disclosure relates to quick connect couplings. More particularly, the present disclosure relates to quick connect couplings for large diameters (five centimetres or more) of tubes for fluid. The present disclosure also relates to a method for regulating sealing pressure in such a quick connect coupling.

### Background

Quick connect couplings are operable by hand and connects normally two tubes with fluid. Internal resistance in the quick connect coupling may be overcome by hand force. However, when the diameter of the quick connect coupling becomes too large, then human hand force is not enough to connect the quick connect coupling, i.e. inserting the nipple, the male part, fully into the coupling, the female part. It is therefore a problem how to realize a quick connect coupling that can be operated always by hand. To this adds the problem that any solution should be compatible with previous nipples, male parts of a coupling. US5390963, US5230538, GB1066815, and US2002/0140227 disclose pipe and tube couplings useful for understanding the background.

A coupling with a large diameter has large forces acting on parts of the coupling. Features, such as for example a locking mechanism, of quick connect couplings of smaller diameters can therefore not automatically be used or adapted to quick connect couplings with larger diameters. Scaling up couplings for smaller diameters is not an option because forces of couplings with larger diameters would destroy such a scaled up coupling. It is a problem how to realize a quick connect coupling having a larger diameter.

It is also desirable to provide a quick connect coupling that is inexpensive to manufacture, is easy to manufacture, and is robust. The quick connect coupling must also be able to provide a good and reliable flow through the coupling. The present disclosure is directed to overcoming one or more of the problems as set forth above.

### Summary of the Invention

It is an object of the present invention to provide a quick connect coupling that can be operated by hand and a method for regulating sealing pressure in such a quick connect coupling. This object can be achieved by the features as defined by the independent claims. Further enhancements are characterised by the dependent claims.

According to the invention, a quick connect coupling operable by hand is disclosed. The quick connect coupling comprises a locking element, and a ring slidably arranged in the quick connect coupling. The ring comprises a first side and a second side, the two sides being opposite to each other. The first side having sealing means. The second side having a pressure area for receiving a spring force, from a spring, and for receiving an internal pressure in the quick connect coupling. The pressure area is configured for the internal pressure to force the ring with the sealing means against a nipple to be connected to the quick connect coupling.

According to the invention, the locking element is a locking ring with a gap. According to the invention, the quick connect coupling comprises a plurality of engaging elements arranged to engage the locking ring (10), and an outer slidable sleeve to position the engaging elements in an inner position for engaging the locking ring to lock the nipple in the quick connect coupling, and in an outer position for unlocking the nipple from the quick connect coupling. According to one embodiment, an element may be arranged in the circumferential gap, and according to the invention the engaging elements are balls. According to one embodiment the locking ring may be made out of steel.

According to one embodiment the inner diameter of the ring may be five centimetres or larger. This is important, because quick connect couplings having a diameter of five centimetres or larger can not be connected by hand force, especially when comprising a fluid under pressure, but the quick connect coupling disclosed herein allows use of only hand force for connecting such large couplings.

According to one embodiment, the spring force may be compressable by hand force. According to one embodiment, the sealing means may be an o-ring.

According to one embodiment, a radial distance R1 between the contact point of the sealing means with a connectable nipple and an outer surface of the ring may be between one quarter and three quarters of the radial thickness of the ring.

According to one embodiment, the quick connect coupling may further comprise a support member for engaging and supporting the nipple when the nipple is connected to the quick connect coupling. Preferably, the support member is a plurality of balls, segments, or a ring.

According to one embodiment, a method setting the sealing pressure in a quick connect coupling according to any one of the preceding embodiments is disclosed. The method comprises configuring a distance R1 between the contact point of the sealing means with connectable nipple and an outer surface of the ring.

According to embodiment, the distance R1 may be between one quarter and three quarters of the radial thickness of the ring.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed or disclose embodiment may be technically combined with any other claimed or disclosed embodiment or embodiments.

### Brief Description of the Drawings

The accompanying drawings illustrate presently exemplary embodiments of the disclosure, and together with the general description given above and the detailed description of the embodiments given below, serve to explain, by way of example, the principles of the disclosure.
FIG. 1 is a diagrammatic illustration of a quick connect coupling according to an exemplary embodiment of the present disclosure;
FIG. 2 is a diagrammatic illustration of a quick connect coupling according to an exemplary embodiment of figure 1 of the present disclosure;
FIG. 3 is a diagrammatic illustration of a quick connect coupling according to an exemplary embodiment of the present disclosure;
FIG. 4 is a diagrammatic illustration of a quick connect coupling according to an exemplary embodiment of figure 3 of the present disclosure; and
FIG. 5 is a diagrammatic illustration of details of a ring and a nipple of a quick connect coupling according to an exemplary embodiment of the present disclosure.

### Detailed Description

In this disclosure the terms "coupling" refers to the female part of a connection and the term "nipple" refers to the male part of a connection. The female part, the coupling, may have a mechanism that connects to the male part, the nipple. Such a coupling and nipple may be, for example, a quick fit connection. A coupling may be a quick connect coupling. The quick connect coupling can be operated, connected and disconnected, by hand force. In this disclosure the terms "quick connect coupling" refers to a coupling that can be easily, quickly, and repeatably be connected and disconnected to a nipple without the use of tools or threading, thus the normal industry definition. The quick connect couplings and nipples are for all types of media, from compressed air to gas, breathing air, fluids and hydraulic oil. A fluid is a liquid and/or a gas.

According to at least one embodiment, a quick connect coupling is operable by hand. Sealing means in the quick connect coupling must be compressed when a nipple is inserted in the coupling by hand. It is normally not possible to compress sealing means with a diameter over 5 cm, especially if an o-ring is used as sealing means. Only hand force can not compress an o-ring of over 5 cm in diameter. While balls are used to lock the nipple in a quick connect coupling, a quick connect coupling for tubes of over 5 cm in diameter can not lock on to the nipple with balls, because the balls will mark the nipple and destroy the nipple when the pressure rises. However, the embodiments described herein with the spring loaded ring in combination with the locking means allows the quick connect coupling to be operable by hand and provide reliable and effective locking of the nipple in the coupling.

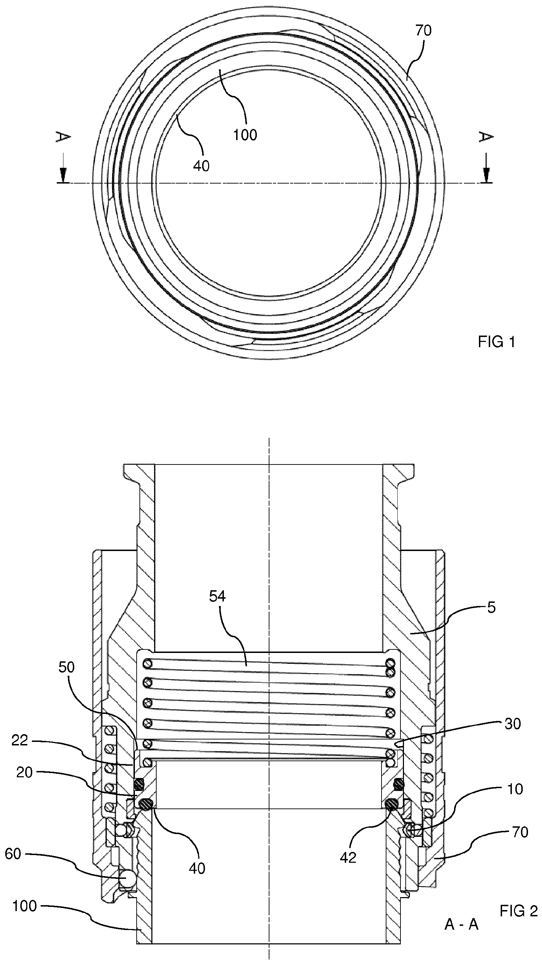

Figures 1 to 5 illustrate exemplary embodiments of a quick connect coupling. According to one embodiment, a quick connect coupling is operable by hand and is over 5 cm in diameter. Hand force of a human operator is thus enough to connect or disconnect the quick connect coupling. No extra tools are needed. The coupling does not need to be screwed onto the nipple.

The quick connect coupling (5) comprises a locking element (10) and a ring (20). The locking element (10) is for locking a nipple in the quick connect coupling. The ring (20) may be a floating ring (20), and is slidably arranged in the quick connect coupling. The ring (20) may be made out of metal, such as for example steel. The ring (20) is slidably arranged in the axial direction of the coupling. The ring (20) has, substantially, a cylindrical shape. The quick connect coupling (5) may have a cylindrical passage (30) for channelling fluid. The ring may fit just inside that cylindrical passage (30) to be slidably arranged inside the coupling.

The ring (20) comprises a first side (40) and a second side (50). The two sides (40, 50) are the end sides of the ring (20), in the flow direction of the quick connect coupling, and the ring (20) may have additionally an inner side and an outer side. All the four sides are continuously circumferential as the ring is substantially cylindrical in shape. The first side (40) is opposite to the second side (50), in the axial direction of the coupling. The first side (40) comprises sealing means (42). The sealing means may be, for example, an o-ring (42). The sealing means (42) are for sealing against a nipple that is to be connected by the quick connect coupling. The sealing means (42) contacts thus the end of a nipple when the nipple is connected. The second side (50) comprises a pressure area (52) receiving, taking up, a spring force. The spring force may be from a spring (54) arranged inside the quick connect coupling. The pressure area (52) is also for receiving an internal pressure in the quick connect coupling when the coupling is connected and channelling pressurised fluid. The pressure area (52) is thus configured to be in contact with the internal pressure and with the spring force. The first side (40) and the second side (50) may have various facets, such as a grove for the sealing means (42), a grove for the spring providing the spring force, but substantially the ring has four sides and has a substantially cylindrical form.

The pressure area (52) is configured for the internal pressure to force the ring (20) with the sealing means (42) against a nipple (100) to be connected to the quick fit coupling. The pressure area is thus dimensioned for the internal pressure, and the spring force, to force, axially, the ring (20) with the sealing means (42) against the nipple (100) to be connected to the quick fit coupling. The pressure area (52) may be dimensioned to be in contact with the internal pressure in the quick connect coupling for moving, in the axial direction, the ring (20) with the sealing means (42) against the nipple (100) to be connected to the quick fit coupling. In one embodiment, the dimension of the pressure area (52) is larger than an area of the second side (50) being in contact with the internal pressure when the second side engages, seals against, a nipple (100). The dimension of the pressure area (52) may be between one and three times the area of the sealing means (42). In one embodiment, the pressure area (52) is larger than an area that the nipple (100) will contact on the first side (40), when connected. According to a preferred embodiment, the configuration is done by configuring the distance R1 between the contact point of the sealing means (42) with connectable nipple (100) and an outer surface (22) of the ring (20). Such a configuration where the sealing means (42) is on the ring (20) sets the sealing pressure for the quick connect coupling.

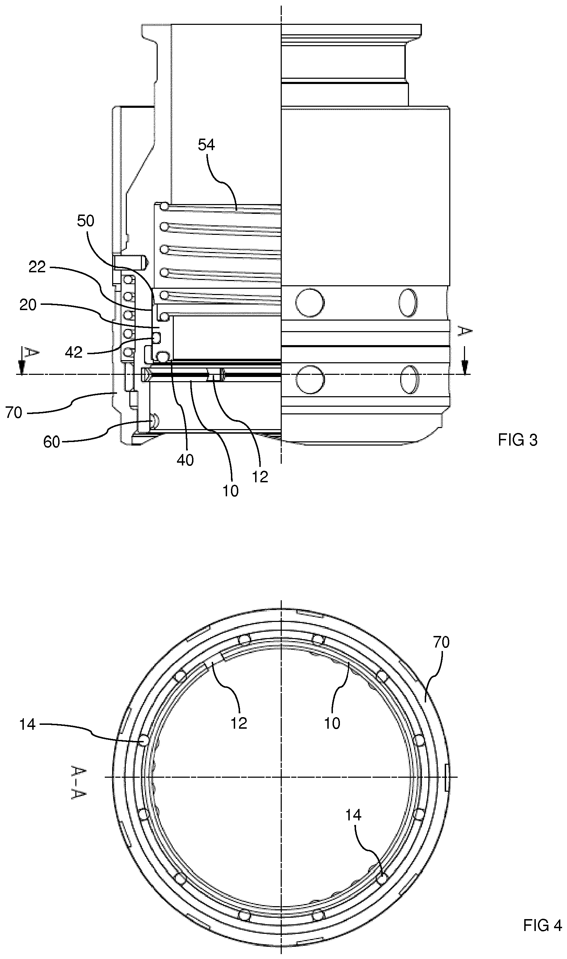

According to the invention, the locking element (10) is a locking ring (10) with a gap (12). The gap (12) may extend for some millimetres, for example 3-15 mm, in a circumferential direction. The gap (12) may be an opening so that the locking ring (10) is thus not a complete ring. The locking ring (10) may thus be C-shaped. Such a gap (12) in the locking ring (10) prevents that the coupling gets stuck, jams, similar to when a drawer gets jammed. Preferably the locking ring (10) is triangular in shape, or substantially triangular in shape, when viewed in a cross section, as illustrated in figures 2 and 3. Preferably the triangularly shaped locking ring (10) is arranged in the quick connect coupling such that one side face radially outwards and one, opposite, edge face inwards.

According to the invention, the quick connect coupling comprises a plurality of engaging elements (14) arranged to engage to locking ring (10). The engaging elements are balls (14). The quick connect coupling comprises an outer slidable sleeve (70) to position the engaging elements (14) in an inner position for engaging the locking ring (10) to lock the nipple (100) in the quick connect coupling, and in an outer position for unlocking the nipple (100) from the quick connect coupling. The outer slidable sleeve (70) may thus be axially slidable into these two positions to either release or connect the nipple (100) to the quick connect coupling (5). The use of engaging elements (14), such as for example balls (14), provides for an even load distribution on the locking ring (10), and jamming is prevented when the nipple is inserted past the locking ring.

According to one embodiment, the quick connect coupling may further comprise an element arranged in the gap (12). This also prevents jamming. Preferably such an element is an elastic element.

According to one embodiment, the locking ring (10) is made out of steel. The profile of the locking ring (10) engaging the nipple may be V-shaped.

According to one embodiment, the inner diameter of the ring is 5 cm or larger. According to one embodiment, the inner diameter of the ring is 7 cm or larger. The combination of the locking ring (10) and the floating ring (20) makes it possible to make a quick connect coupling that can be operated by hand force for couplings with a large diameter, such as for example 5 cm or larger.

According to one embodiment, the spring force is compressable by hand force. In other words, the spring force can be overcome by hand force. According to one embodiment, the sealing means (42) is an o-ring, an x-ring, or any other sealing means.

According to one embodiment, the quick connect coupling may further comprise a support member (60) for engaging and supporting the nipple when be connected to the quick fit coupling. Preferably the support member is a plurality of balls, segments, or a ring. The support member (60) may support the nipple to be co-axially aligned in the quick connect coupling, and this may increase the safety, holding force, and sealing.

According to one embodiment, a radial distance R1 between the contact point of the sealing means (42) with a connectable nipple and an outer surface of the ring (20) is between one quarter and three quarters of the radial thickness of the ring (20). Preferably R1 is between one quarter and two thirds of the radial thickness of the ring (20).

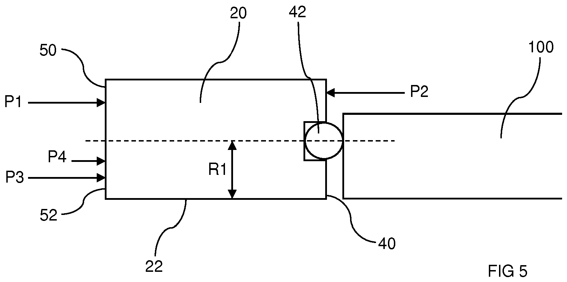

According to one embodiment, a method for regulating or setting the sealing pressure in a quick connect coupling according to any one of the embodiments disclosed herein is disclosed. By configuring the distance R1 between the contact point of the sealing means (42) with a connectable nipple (100) and an outer (in the radial direction) surface (22) of the ring (20), the sealing pressure of the quick connect coupling is decided. Figure 5 is a schematic illustration of how the force forcing the ring (20) against the nipple (100) may be configured and shows a cut of the ring (2) and a part cut of the nipple (100). The ring (20) comprises the sealing means (42) and figure 5 illustrates when the nipple (100) is in contact with the sealing means (42). The inside of the coupling is upwards in figure 5 and the outside of the coupling is downwards in figure 5. The point of contact is shown with a broken line in figure 5. The broken line is a radial distance R1 from the outer surface (22) of the ring (20). R1 is how far in from the outer surface (22) of the ring (20) the contact point of the sealing means (42), for example the centre of the sealing means, for example the centre of an o-ring, is (with the nipple (100)). The first side (40) of the ring (20) can be divided according to the broken line into an inner area of the first side of the ring and an outer area of the first side of the ring. The second side (50) of the ring (20) can be divided according to the broken line into an inner area of the second side (50) of the ring (20) and an outer area of the second side of the ring. These areas are circumferential, limited by outer and inner diameters, respectively, of the ring (20). When the quick connect coupling is connected with the nipple and a fluid is lead through the coupling, then a pressure from the fluid inside the quick connect coupling acts on the ring (20). This causes a force P1 to act on the inner area of the second side (50) of the ring (20) and a force P2 to act on the inner area of the first side (40) of the ring (20). The forces P1 and P2 are of the same size and act on the opposite areas of the same ring (20) and therefore take each other out and do not force the ring (20) in any axial direction. No force acts on the outer area of the first side (40) of the ring (20). On the outer area of the second side (50) of ring (20) acts the pressure P3 from the fluid and the spring force P4. The pressure P3 from the fluid is known because the pressure of the fluid used in the coupling is known. The two forces, pressure P3 and spring force P4, adds together to force the sealing means (42) against the nipple (100). By configuring how far away the contact point of the sealing means (42) is from the outer surface (22) of the ring (20), the sealing pressure, being the two forces P3 plus P4, can be decided for the quick connect coupling. In other words, by configuring where the contact point of the sealing means (42) of the floating ring (20) is with respect to the nipple (100), the sealing pressure, being P3 plus P4, can be decided for the quick connect coupling. The distance R1 may, for example, be between one quarter and three quarters of the radial thickness of the ring (20). The distance R1 may, for example, be between one quarter and three quarters of the radial thickness of the ring (20).

By configuring the sealing pressure in this way, by deciding the distance R1, how far inwards the sealing means (42) on the floating ring (20) is to contact the nipple (100), the sealing pressure for quick connect couplings may be set, decided. The sealing pressure may be configured for optimal sealing and without destroying the sealing means. In this way the only force to overcome when the quick connect coupling is coupled to a nipple by hand force is the spring force P4.

It will be apparent to those skilled in the art that various modifications and variations can be made to the quick connect coupling and method of setting the sealing pressure for such a quick connect coupling. Other embodiments will be apparent to those skilled in the art from consideration of the specification and practice of the disclosed coupling and method. It is intended that the specification and examples be considered as exemplary only, with a true scope being indicated by the following claims.

### List of elements

Quick connect coupling (5)
Locking element (10)
Gap (12)
Engaging elements (14)
Ring (20)
Outer surface (22) of ring (20)
Cylindrical passage (30)
First side (40)
Sealing means (42)
Second side (50)
Pressure area (52)
Spring (54)
Support member (60)
Outer slidable sleeve (70)
Nipple (100)

## Claims

1. A quick connect coupling, operable by hand, the quick connect coupling comprising
a locking element (10); and
a ring (20) slidably arranged in the quick connect coupling;
the ring comprising
a first side (40) and a second side (50), the two sides being opposite to each other;
the first side having sealing means (42);
the second side having a pressure area (52) for receiving a spring force and for receiving an internal pressure in the quick connect coupling; and
wherein the pressure area (52) is configured for the internal pressure to force the ring (20) with the sealing means (42) against a nipple (100) to be connected to the quick connect coupling, wherein the locking element (10) is a locking ring (10) with a gap (12); and wherein the quick connect coupling further comprises a plurality of engaging elements (14) arranged to engage the locking ring (10), the engaging elements (14) being balls, and an outer slidable sleeve (70) to position the engaging elements (14) in an inner position for engaging the locking ring to lock the nipple in the quick connect coupling, and in an outer position for unlocking the nipple from the quick connect coupling.

2. The quick connect coupling according to claim 1, wherein an element is arranged in the gap (12).

3. The quick connect coupling according to any one of the preceding claims, wherein the locking ring (10) is made out of steel.

4. The quick connect coupling according to any one of the preceding claims, wherein the inner diameter of the ring (20) is 5 cm or larger.

5. The quick connect coupling according to any one of the preceding claims, wherein the spring force is compressable by hand force.

6. The quick connect coupling according to any one of the preceding claims, wherein the sealing means (42) is an o-ring.

7. The quick connect coupling according to any one of the preceding claims, wherein a radial distance R1 between the contact point of the sealing means (42), for a connectable nipple, and an outer surface of the ring (20) is between one quarter and three quarters of the radial thickness of the ring (20).

8. The quick connect coupling according to any one of the preceding claims, further comprising a support member (60) for engaging and supporting the nipple (100) when the nipple is connected to the quick connect coupling.

9. The quick connect coupling according to claim 8, wherein the support member (60) is a plurality of balls, segments, or a ring.

10. A method setting the sealing pressure in a quick connect coupling according to any one of the preceding claims, the method comprising
configuring a distance R1 between the contact point of the sealing means (42) with connectable nipple and an outer surface of the ring (20).

11. The method according to claim 10, wherein the distance R1 is between one quarter and three quarters of the radial thickness of the ring (20).

## Patentansprüche

1. Eine von Hand betätigbare Schnellverschlusskupplung, wobei die Schnellverschlusskupplung Folgendes beinhaltet:
ein Arretierelement (10); und
einen Ring (20), der gleitfähig in der Schnellverschlusskupplung angeordnet ist;
wobei der Ring Folgendes beinhaltet:
eine erste Seite (40) und eine zweite Seite (50), wobei die beiden Seiten einander gegenüberliegen;
wobei die erste Seite ein Dichtungsmittel (42) aufweist;
wobei die zweite Seite einen Druckbereich (52) zum Aufnehmen einer Federkraft und zum Aufnehmen eines Innendrucks in der Schnellverschlusskupplung aufweist; und
wobei der Druckbereich (52) derart konfiguriert ist, dass der Innendruck den Ring (20) mit dem Dichtungsmittel (42) gegen einen Rohrstutzen (100), der mit der Schnellverschlusskupplung verbunden werden soll, drückt,
wobei das Arretierelement (10) ein Arretierring (10) mit einem Spalt (12) ist; und
wobei die Schnellverschlusskupplung ferner Folgendes beinhaltet: eine Vielzahl von Eingriffselementen (14), die angeordnet sind, um mit dem Arretierring (10) in Eingriff zu treten, wobei die Eingriffselemente (14) Kugeln sind, und eine äußere gleitfähige Hülse (70) zum Positionieren der Eingriffselemente (14) in einer inneren Position zum Eingriff in den Arretierring, um den Rohrstutzen in der Schnellverschlusskupplung zu arretieren, und in einer äußeren Position zum Entriegeln des Rohrstutzens von der Schnellverschlusskupplung.

2. Schnellverschlusskupplung gemäß Anspruch 1, wobei ein Element in dem Spalt (12) angeordnet ist.

3. Schnellverschlusskupplung gemäß einem der vorhergehenden Ansprüche, wobei der Arretierring (10) aus Stahl hergestellt ist.

4. Schnellkupplung gemäß einem der vorhergehenden Ansprüche, wobei der Innendurchmesser des Rings (20) 5 cm oder mehr beträgt.

5. Schnellverschlusskupplung gemäß einem der vorhergehenden Ansprüche, wobei die Federkraft durch Handkraft komprimierbar ist.

6. Schnellverschlusskupplung gemäß einem der vorhergehenden Ansprüche, wobei das Dichtungsmittel (42) ein O-Ring ist.

7. Schnellverschlusskupplung gemäß einem der vorhergehenden Ansprüche, wobei ein radialer Abstand R1 zwischen dem Kontaktpunkt des Dichtungsmittels (42), für einen verbindbaren Rohrstutzen, und einer Außenfläche des Rings (20) zwischen einem Viertel und drei Vierteln der radialen Dicke des Rings (20) beträgt.

8. Schnellverschlusskupplung gemäß einem der vorhergehenden Ansprüche, ferner beinhaltend ein Stützelement (60) zum Eingreifen in den und Stützen des Rohrstutzens (100), wenn der Rohrstutzen mit der Schnellverschlusskupplung verbunden ist.

9. Schnellverschlusskupplung gemäß Anspruch 8, wobei es sich bei dem Stützelement (60) um eine Vielzahl von Kugeln, Segmenten oder einen Ring handelt.

10. Ein Verfahren zum Einstellen des Dichtungsdrucks in einer Schnellverschlusskupplung gemäß einem der vorhergehenden Ansprüche, wobei das Verfahren das Konfigurieren eines Abstands R1 zwischen dem Kontaktpunkt des Dichtungsmittels (42) mit dem verbindbaren Rohrstutzen und einer Außenfläche des Rings (20) beinhaltet.

11. Verfahren gemäß Anspruch 10, wobei der Abstand R1 zwischen einem Viertel und drei Vierteln der radialen Dicke des Rings (20) beträgt.

## Revendications

1. Un raccord rapide, pouvant être manœuvré manuellement, le raccord rapide comprenant :
un élément de verrouillage (10) ; et
une bague (20) agencée de façon à pouvoir coulisser dans le raccord rapide ;
la bague comprenant :
un premier côté (40) et un deuxième côté (50), les deux côtés étant à l'opposé l'un de l'autre ;
le premier côté ayant un moyen d'étanchéité (42) ;
le deuxième côté ayant une zone de pression (52) pour recevoir une force de ressort et pour recevoir une pression interne dans le raccord rapide ; et
où la zone de pression (52) est configurée pour que la pression interne contraigne l'anneau (20) avec le moyen d'étanchéité (42) contre un mamelon (100) devant être raccordé au raccord rapide,
où l'élément de verrouillage (10) est une bague de verrouillage (10) avec un espace (12) ; et
où le raccord rapide comprend en outre une pluralité d'éléments de mise en prise (14) agencés pour se mettre en prise avec la bague de verrouillage (10), les éléments de mise en prise (14) étant des billes, et un manchon extérieur pouvant coulisser (70) afin de positionner les éléments de mise en prise (14) dans une position intérieure pour se mettre en prise avec la bague de verrouillage afin de verrouiller le mamelon dans le raccord rapide, et dans une position extérieure afin de déverrouiller le mamelon du raccord rapide.

2. Le raccord rapide selon la revendication 1, où un élément est agencé dans l'espace (12).

3. Le raccord rapide selon l'une quelconque des revendications précédentes, où la bague de verrouillage (10) est réalisée en acier.

4. Le raccord rapide selon l'une quelconque des revendications précédentes, où le diamètre intérieur de la bague (20) fait 5 cm ou plus.

5. Le raccord rapide selon l'une quelconque des revendications précédentes, où la force de ressort peut être comprimée par force manuelle.

6. Le raccord rapide selon l'une quelconque des revendications précédentes, où le moyen d'étanchéité (42) est un joint torique.

7. Le raccord rapide selon l'une quelconque des revendications précédentes, où une distance radiale R1 entre le point de contact du moyen d'étanchéité (42), pour un mamelon pouvant être raccordé, et une surface extérieure de la bague (20) fait entre un quart et trois quarts de l'épaisseur radiale de la bague (20).

8. Le raccord rapide selon l'une quelconque des revendications précédentes, comprenant en outre un organe de soutien (60) pour se mettre en prise avec le mamelon (100) et le soutenir lorsque le mamelon est raccordé au raccord rapide.

9. Le raccord rapide selon la revendication 8, où l'organe de soutien (60) est une pluralité de billes, des segments, ou une bague.

10. Un procédé réglant la pression d'étanchéité dans un raccord rapide selon l'une quelconque des revendications précédentes, le procédé comprenant :
la configuration d'une distance R1 entre le point de contact du moyen d'étanchéité (42) avec le mamelon pouvant être raccordé et une surface extérieure de la bague (20).

11. Le procédé selon la revendication 10, où la distance R1 fait entre un quart et trois quarts de l'épaisseur radiale de la bague (20).
